# EUROPÄISCHE PATENTANMELDUNG

(11) **EP 1 191 671 A2**
(43) Veröffentlichungstag der Anmeldung: **27.03.2002**
(21) Anmeldenummer: 01120551.5
(22) Anmeldetag: 29.08.2001
(51) Int. Cl.: H02K 11/00

(54) **Flammgeschützter Generator**

(30) Priorität: 21.09.2000 DE 10047476
(71) Anmelder: ROBERT BOSCH GMBH, 70442 Stuttgart (DE)
(72) Erfinder: Haupt, Martin, CF717BR Cowbridge (GB); Labitzke, Herbert, 71706 Markgroeningen (DE); Csicser, Walter, 71701 Schwieberdingen (DE); Mittelstaedt, Klaus-Uwe, 71287 Weissach (DE); Scholzen, Holger, 71701 Schwieberdingen (DE); Heinz, Karl-Otto, 71686 Remseck (DE); Haussmann, Holger, 72555 Metzingen (DE); Stilke, Henning, 27356 Rotenburg/Wuemme (DE); Lehnertz, Hermann, 70736 Fellbach (DE)

(57) **Zusammenfassung**

Die Erfindung betrifft einen Generator in Kraftfahrzeugen, vorzugsweise einen Drehstromgenerator (24) mit zumindest einem elektrisch überlastbaren Bereich (15, 16, 17, 26, 26a, 27, 27a, 30, 30a) zumindest einer elektrischen Einrichtung (14, 23) zur Versorgung des Kraftfahrzeugbordnetzes, deren stromführende Teile von einer Schutzkappe (24) abgedeckt sind. Nahe der zumindest einen elektrischen Einrichtung (14, 23) ist zumindest eine Abdeckung (31) angeordnet, die mit einer Beschichtung (32) versehen ist, die bei unzulässig hoher Erwärmung zumindest eines elektrisch überlasteten Bereichs (15, 16, 17, 26, 26a, 27, 27a, 30, 30a) aufschäumt und dadurch den zumindest einen elektrisch überlasteten Bereich (15, 16, 17, 26, 26a, 27, 27a, 30, 30a) mit Schaum umschließt und dadurch von der Umgebungsluft weitestgehend abschließt.

## Beschreibung

### Stand der Technik

Die Erfindung betrifft einen Generator, insbesondere Drehstromgenerator in Kraftfahrzeugen, nach der Gattung des Anspruchs 1.

In Kraftfahrzeugen werden in zunehmendem Maße elektrische Einrichtungen eingesetzt, um Komfort und Sicherheit der Kraftfahrzeuge zu verbessern. Zur Versorgung dieser Einrichtungen im Bordnetz der Kraftfahrzeuge werden in den weitaus meisten Fällen Drehstromgeneratoren verwendet, die eine hohe Leistungsdichte aufweisen und somit thermisch stark beansprucht werden. Im Gehäuse der Drehstromgeneratoren sind dann ein Regler sowie eine Gleichrichteranordnung integriert, so dass lediglich deren Gleichstromausgang die Anschlussklemmen des Generators bilden, an denen die Anschlusskabel einer Akkumulatorbatterie des Kraftfahrzeug-Bordnetzes angeschlossen werden. Bei einer Überlastung oder bei Kurzschluss am Generator bzw. am Regler oder an der Gleichrichteranordnung, beispielsweise durch einen falsch gepolten Anschluss einer Batterieladeeinrichtung bei entladender Akkumulatorbatterie, kann nicht nur der Generator, der Regler oder die Gleichrichteranordnung zerstört werden. Möglich wäre es auch, dass weitere thermische Schäden am Fahrzeug dadurch ausgelöst werden. Eine thermische Schädigung könnte dabei am ehesten die Kunststoffe bzw. Vergussmassen der Dioden der Gleichrichteranordnung oder des Reglers betreffen. Diese bilden die am meisten gefährdeten Bereiche der stromführenden Teile.

Zur Vermeidung dieser Gefahren ist es aus der DE 30 01 522 C2 bereits bekannt, in der Gleichrichteranordnung zwischen den Verbindungen der Plus-und Minus-Dioden der drei Gleichrichterbrücken Sicherungen anzuordnen. Die Sicherungen werden dabei durch schleifenförmig aus Ausnehmungen einer Schaltungsplatine der Gleichrichteranordnung heraus gebogene Leiterabschnitte gebildet, die im Falle einer elektrischen und dadurch thermischen Überlastung durchschmelzen, so die jeweilig betroffene Gleichrichterbrücke und dadurch eine Wärmequelle abschalten.

Dies hat den Nachteil, dass beim Durchschmelzen der Sicherung ein elektrischer Lichtbogen auftreten kann, welcher auf benachbarte Teile übergreifen und diese zerstören könnte. Nachteilig ist hierbei ferner, dass bei einer längeren Überlastung nach dem Ausfall einer ersten Gleichrichterbrücke durch das Ansprechen der ersten Sicherung die restlichen beiden Gleichrichterbrücken noch mehr überlastet werden, so dass auch dort die Sicherungen ansprechen und sich die Gefahr, dass die benachbarten Teile beschädigt werden können, vergrößert.

Mit der vorliegenden Erfindung wird angestrebt, an den überlastungsgefährdeten Teilen des Kraftfahrzeug-Generators mit möglichst einfachen und zuverlässigen Mitteln die Möglichkeit des Auftretens einer Überhitzung und ggf. einer Flamme zu verhindern.

### Vorteile der Erfindung

Die erfindungsgemäße Schutzeinrichtung für den Kraftfahrzeug-Generator gemäß dem Kennzeichnungsteil des Hauptanspruchs hat den Vorteil, dass beim Auftreten einer elektrischen Überlastung bzw. durch einen Kurzschluss an den gefährdeten Bereichen der stromführenden Teile Überhitzung und Flammenbildung bereits von vorneherein verhindert wird, indem durch die Erhitzung die Beschichtung der darüber angeordneten Abdeckungen aufschäumt und den gefährdeten Bereich abzudecken vermag. Der gefährdete Bereich wird dadurch von der Umgebungsluft und damit vom Oxidationsmittel abgetrennt, so dass sich Flammen nicht ausbreiten können. Ein weiterer Vorteil besteht darin, dass für einen derartigen Schutz konstruktive Änderungen am Generator, am Regler oder der Gleichrichteranordnung nicht erforderlich sind. Somit ist es auch möglich, bereits ausgelieferte Generatoren oder Gleichrichter mit der Schutzeinrichtung nachzurüsten.

Vorteilhafte Weiterbildungen und Ausgestaltungen ergeben sich aus den übrigen, in den Unteransprüchen genannten Merkmalen. Eine besonders wirksame Maßnahme ist dabei, die beschichteten Abdeckungen so dicht neben den gefährdeten Bereichen der stromführenden Teile anzuordnen, dass im Falle einer Überlastung oder eines Kurzschlusses die dann aufschäumende Beschichtung den daneben liegenden durch Überhitzung gefährdeten Bereich abdeckt. Zweckmäßigerweise wird dabei der Abstand der Abdeckungen zu den gefährdeten Bereichen sowie das Material der Beschichtung so gewählt, dass eine Entzündung der gefährdeten Bereiche während der Überhitzung von vorneherein verhindert wird. Darüber hinaus wird in vorteilhafter Weise der Abstand der durch Erhitzung aufschäumende Beschichtung tragenden Abdeckung zu den gefährdeten Bereichen der stromführenden Teile so gewählt, dass dort selbst für den Fall, dass doch noch eine Flamme auftritt, die Sauerstoffzufuhr durch den Schaum der aufschäumenden Beschichtung soweit verringert wird, dass die chemische Reaktion abbricht. Da die Überhitzungsgefahr durch Überlastung insbesondere an den Vergussmassen der Dioden der Gleichrichteranordnung bzw. an den Kunststoffen des Reglers auftreten, werden in zweckmäßiger Weise nahe dieser Bereiche der stromführenden Teile die beschichteten Abdeckungen angeordnet.

In besonders einfacher Weise sind die beschichteten Abdeckungen Teil einer an sich bekannten, vorhandenen Schutzkappe, welche die Gleichrichteranordnung und den Regler abdecken.

Für die aufschäumende Beschichtung werden Materialien verwendet wie sie als Brandschutz aus dem Bauwesen bereits bekannt sind. Als besonders geeignet haben sich eine Brandschutzdispersion der Firma SyBra mit der Bezeichnung Unitherm D 38 320, ein Dämmschichtbildner der gleichen Firma mit der Bezeichnung Unitherm K 38104 sowie ein aufschäumender Kunststoff der Firma Tramaco mit der Bezeichnung D 1500 NE erwiesen.

### Zeichnung

Weitere Einzelheiten der Erfindung sind in dem nachfolgenden beschriebenen Ausführungsbeispiel anhand der dazugehörigen Zeichnungen näher erläutert.

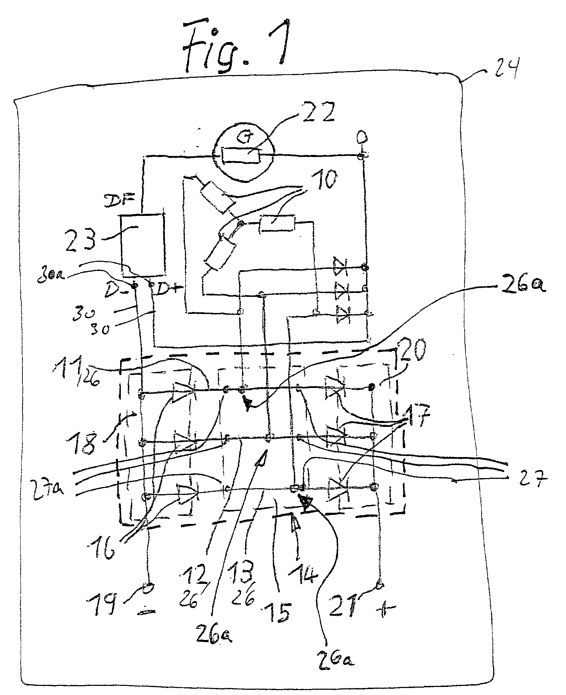

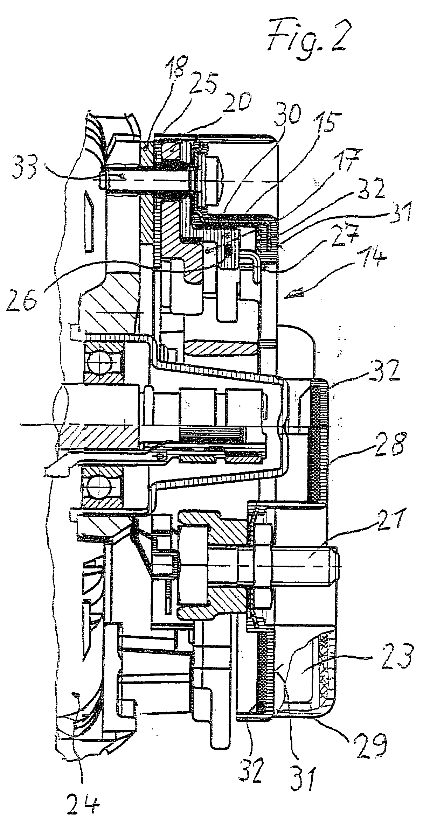

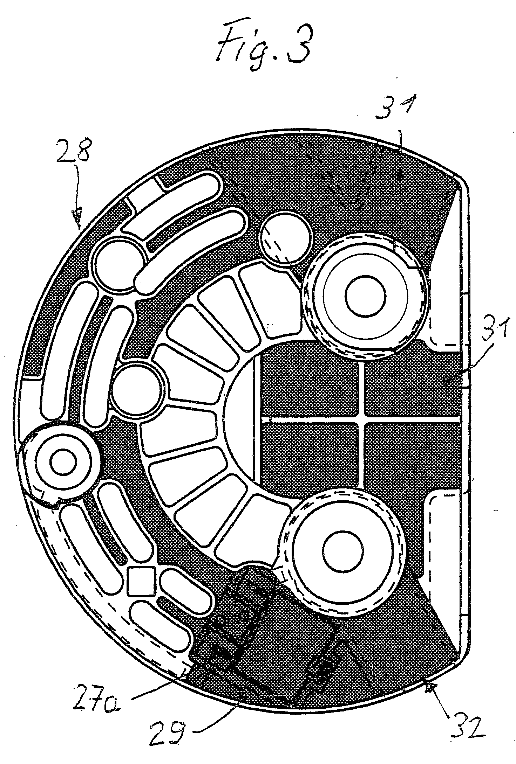

Figur 1 zeigt die Schaltung eines Drehstromgenerators für Kraftfahrzeuge mit einer Gleichrichteranordnung und einem Regler, Figur 2 zeigt einen Querschnitt durch den hinteren Teil des Generators und der Gleichrichteranordnung mit einer Schutzkappe und Figur 3 zeigt die Innenansicht der Schutzkappe mit der aufschäumbaren Beschichtung.

### Beschreibung des Ausführungsbeispieles

In Figur 1 sind die drei Phasen 10 eines Drehstromgenerators 24 für Kraftfahrzeuge dargestellt, die mit ihrem einen Ende zu einer Sternschaltung zusammengefasst und mit ihrem anderen Ende auf jeweils eine Diodenbrücke 11, 12 und 13 einer Gleichrichteranordnung 14 geschaltet sind. Zur Verschaltung der drei Phasen 10 mit den drei Diodenbrücken dient eine Leiterplatine, wobei jede der drei Diodenbrücken aus einer in Reihe geschalteten Minusdiode 16 und Plusdiode 17 besteht. Die Minusdioden 16 sind anodenseitig in einen Minus-Kühlkörper 18 eingepresst und die Anodenanschlüsse der Minusdioden 16 sind somit durch den Minus-Kühlkörper 18 zu einem Minusanschluss 19 zusammengefasst. Die Plusdioden 17 sind kathodenseitig in einen Plus-Kühlkörper 20 eingepresst. In diesem Kühlkörper 20 sind die Kathodenanschlüsse der Plusdioden zu einem Plusanschluss 21 zusammengefasst. Der Drehstromgenerator ist mit seiner im Rotor untergebrachten Erregerwicklung 22 mit einem Regler 23 verbunden, der abhängig von der Belastung des am Bordnetz des Kraftfahrzeugs angeschlossenen Gleichrichterausganges den Erregerstrom und damit die abgegebene Leistung des Drehstromgenerators regelt.

Figur 2 zeigt einen Querschnitt durch das hintere Ende des Drehstromgenerators 24 mit der Gleichrichteranordnung 14 und dem Regler 23. Der Aufbau der Gleichrichteranordnung 14 ist derart, dass der Minus-Kühlkörper 18 unmittelbar an der Stirnseite des Generatorgehäuses aufliegt. Der Minus-Kühlkörper 18 wird von einer Isolierplatte 25 abgedeckt, die ihrerseits den Plus-Kühlkörper 20 aufnimmt. Oberhalb des Plus-Kühlkörpers 20 sitzt die Leiterplatine 15 mit darin eingespritzten Verbindungsleitern 26 zum Anschluss der Plus-und Minusdioden 16, 17 sowie der Anschlussdrähte der drei Phasen 10 des Generators 24. Eine solche Verbindung 27 zwischen einem Verbindungsleiter 26 der Leiterplatine 15 und der Plusdiode 17 ist in Figur 2 erkennbar.

Die Leiterplatine 15 wird von außen durch eine Schutzkappe 28 abgedeckt, um die spannungsführenden Teile der Gleichrichteranordnung 14 gegen Berührung von außen zu schützen. In einer Mulde 29 der Schutzkappe 28 ist der Regler 23 untergebracht, der über Anschlussleiter 30, die ihrerseits in der aus Kunststoff gespritzten Schutzkappe 28 eingebettet sind, mit der Gleichrichteranordnung 14 und dem Generator verschaltet ist. Die Verbindungen 27, die Verbindungsleiter 26, die Leiterplatine 15 mit den Dioden 16 und 17, sowie Löt- und Schweißverbindungen 30a des Reglers 23 mit den Anschlussleitern 30 der Schutzkappe 28, s. a. Fig. 1, stellen Bereiche dar, die bei einer elektrischen Überlastung durch Überhitzung oder gar Verschmelzung gefährdet sind. Analog dazu sind neben den Verbindungen 27 Verbindungen 27a in Fig. 1 und Fig. 2 gezeigt, die Verbindungen zwischen den Minusdioden 16 und den Verbindungsleitern 26 darstellen. Verbindungen 26a verbinden die drei Phasen 10 mit den Verbindungsleitern 26. Dort könnte die Möglichkeit bestehen, dass sich durch Funken oder Lichtbögen Stoffe entzünden, die zu einer entsprechenden Zerstörung des Generators führen können. Um dies jedoch zu verhindern, sind Bereiche der Schutzkappe 28 als Abdeckungen 31 ausgebildet, die nahe der gefährdeten Verbindungen 27, 27a, der Verbindungsleiter 26 der Leiterplatine 15, der Dioden 16 und 17 sowie der Löt- und Schweissverbindungen 30a angeordnet sind, die auf der den Verbindungen 27 zugewandten Seite mit einer flammhemmenden, durch Erhitzung aufschäumenden Beschichtung 32 versehen sind.

Der Umfang der Beschichtung 32 an der Innenseite der Schutzkappe 28 ist in Figur 3 dargestellt. Die Abdeckungen 31 der Schutzkappe 28 sind dabei so dicht an den gefährdeten Verbindungen 27 angeordnet, dass bei einem Aufschäumen der Beschichtung 32 diese den danebenliegenden gefährdeten Bereich der Verbindungen 27 abdeckt und eine Zufuhr von Oxidationsmittel zumindest hemmt oder gar vollständig unterbindet.

Als Material der Beschichtung 32 eignen sich Stoffe, die sich bereits im Bauwesen für den Brandschutz an Gebäuden bewährt haben. Geeignet sind Brandschutzdispersionen, Dämmschichtbildner oder bei Temperatureinwirkung aufschäumende Kunststoffe. Da die Aufschäumtemperaturen dieser Materialien unterschiedlich sind, wird die Aufschäumtemperatur und das Aufschäumvolumen durch eine entsprechende Auswahl der Beschichtung 32 so vorgegeben, dass bei Überhitzung der gefährdeten Bereiche der spannungsführenden Teile, d.h. in erster Linie bei Überhitzung der Verbindungen 27 durch Aufschäumen der Beschichtung 32 eine Flamme und deren Ausbreitung verhindert wird. Der Abstand der Abdeckungen 31 zu den gefährdeten Verbindungen 27 ist ferner so gewählt, dass dort beim Auftreten einer unzulässig erhöhten Temperatur die Sauerstoffzufuhr durch den Schaum der aufschäumenden Beschichtung 32 so weit verringert wird, dass die chemische Reaktion entweder abbricht oder gar nicht erst beginnt. Durch die geeignete Wahl der Beschichtung 32 und der Geometrie der Bauteile im Bereich der gefährdeten Bereiche der spannungsführenden Teile wirkt diese Beschichtung nicht nur als passiver Schutz gegenüber der Schutzkappe, sondern auch als aktiver Schutz, durch den die Flammenbildung verhindert oder eine bereits bestehende Flamme zum Erlöschen gebracht wird. Für das Ausführungsbeispiel ist ein aufschäumender Kunststoff der Firma Tramaco mit der Bezeichnung D 1500 NE vorgesehen.

## Patentansprüche

1. Generator, insbesondere Drehstromgenerator (24) für Kraftfahrzeuge, mit zumindest einem elektrisch überlastbaren Bereich (15, 16, 17, 26, 26a, 27, 27a, 30, 30a) zumindest einer elektrischen Einrichtung (14, 23) zur Versorgung des Kraftfahrzeugbordnetzes, deren stromführende Teile von einer Schutzkappe (24) abgedeckt sind, **dadurch gekennzeichnet, dass** nahe der zumindest einen elektrischen Einrichtung (14, 23) zumindest eine Abdeckung (31) angeordnet ist, die mit einer Beschichtung (32) versehen ist, die bei unzulässig hoher Erwärmung zumindest eines elektrisch überlasteten Bereichs (15, 16, 17, 26, 26a, 27, 27a, 30, 30a) aufschäumt und dadurch den zumindest einen elektrisch überlasteten Bereich (15, 16, 17, 26, 26a, 27, 27a, 30, 30a) mit Schaum umschließt und dadurch von der Umgebungsluft weitestgehend abschließt.

2. Generator nach Anspruch 1, **dadurch gekennzeichnet, dass** die zumindest eine Abdeckung (31) so dicht an dem zumindest einen elektrisch überlastbaren Bereich (15, 16, 17, 26, 26a, 27, 27a, 30, 30a) angeordnet ist, dass beim Aufschäumen der Beschichtung (32) diese zumindest einen weiteren daneben liegenden elektrisch überlastbaren Bereich (15, 16, 17, 26, 26a, 27, 27a, 30, 30a) bedeckt.

3. Generator nach Anspruch 2, **dadurch gekennzeichnet, dass** eine Aufschäumtemperatur und ein Aufschäumvolumen durch entsprechende Auswahl der Beschichtung (32) eine Flammentzündung des zumindest einen elektrisch überlastbaren Bereichs (15, 16, 17, 26, 26a, 27, 27a, 30, 30a) verhindert.

4. Generator nach Anspruch 2, **dadurch gekennzeichnet, dass** ein Abstand der zumindest einen Abdeckung (31) zu dem zumindest einen elektrisch überlastbaren Bereich (15, 16, 17, 26, 26a, 27, 27a, 30, 30a) so gewählt ist, dass dort beim Auftreten einer Flamme die Sauerstoffzufuhr durch den Schaum der aufschäumenden Beschichtung (32) soweit verringerbar ist, dass eine die Flamme verursachende Reaktion abbricht.

5. Generator nach einem der vorherigen Ansprüche, **dadurch gekennzeichnet, dass** die zumindest eine Abdeckung (31) oberhalb von Löt- und/oder Schweißverbindungen (27) einer Gleichrichteranordnung (14) und/oder eines Reglers (23) angeordnet ist.

6. Generator nach Anspruch 5, **dadurch gekennzeichnet, dass** die zumindest eine Abdeckung (31) Teil der Schutzkappe (28) ist.

7. Generator nach einem der vorherigen Ansprüche, **dadurch gekennzeichnet, dass** das Material der Beschichtung (32) eine Brandschutzdispersion ist.

8. Generator nach einem der Ansprüche 1 bis 6, **dadurch gekennzeichnet, dass** das Material der Beschichtung (32) ein Dämmschichtbildner ist.

9. Generator nach einem der Ansprüche 1 bis 6, **dadurch gekennzeichnet, dass** das Material der Beschichtung (32) ein aufschäumbarer Kunststoff ist.

10. Schutzkappe, insbesondere für einen Drehstromgenerator (24), **dadurch gekennzeichnet, dass** diese eine Abdeckung (31) aufweist, die eine bei Erwärmung aufschäumbare Beschichtung (32) trägt.
